(19)

Europäisches
Patentamt
European
Patent Office
Office européen
des brevets

(11) **EP 2 091 882 B1**

(12) **EUROPEAN PATENT SPECIFICATION**

(45) Date of publication and mention
of the grant of the patent:
**01.06.2011 Bulletin 2011/22**

(51) Int Cl.:
**C08G 18/67** *(2006.01)*        **C09D 5/00** *(2006.01)*
**C08G 18/48** *(2006.01)*

(21) Application number: **07862854.2**

(86) International application number:
**PCT/US2007/025486**

(22) Date of filing: **13.12.2007**

(87) International publication number:
**WO 2008/076303 (26.06.2008 Gazette 2008/26)**

(54) **D1365 BJ RADIATION CURABLE PRIMARY COATING FOR OPTICAL FIBER**

STRAHLUNGSHÄRTBARE D 1365 BJ-GRUNDIERBESCHICHTUNG FÜR OPTISCHE FASERN

REVÊTEMENT PRIMAIRE DURCISSABLE PAR RAYONNEMENT POUR FIBRE OPTIQUE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **14.12.2006 US 874731 P**

(43) Date of publication of application:
**26.08.2009 Bulletin 2009/35**

(73) Proprietor: **DSM IP Assets B.V.**
**6411 TE Heerlen (NL)**

(72) Inventors:
 • **NORLIN, Tyson Dean**
  **South Elgin, IL 60177 (US)**
 • **SCHMID, Steven R.**
  **East Dundee, IL 60118 (US)**
 • **MURPHY, Edward J.**
  **Arlington Heights, IL 60005 (US)**
 • **ZIMMERMAN, John M.**
  **Crystal Lake, IL 60014 (US)**
 • **TORTORELLO, Anthony Joseph**
  **Elmhurst, IL 60126 (US)**

(74) Representative: **Hatzmann, Martin**
**Vereenigde**
**Johan de Wittlaan 7**
**2517 JR Den Haag (NL)**

(56) References cited:
 **EP-A- 1 408 017        EP-A- 1 647 585**
 **WO-A-02/42236        WO-A-98/57902**
 **US-A- 5 616 630        US-A1- 2004 209 994**
 **US-B1- 6 630 242        US-B2- 6 714 712**
 **US-B2- 7 135 229**

 • **PODKOSCIELNY W ET AL: "URETHANE-
  ACRYLATE COMPOSITIONS CURED BY UV
  RADIATION AS INTERMEDIATE PROTECTIVE
  COVERS OF OPTICAL FIBERS" ANGEWANDTE
  MAKROMOLEKULARE CHEMIE. APPLIED
  MACROMOLECULAR CHEMISTRY AND
  PHYSICS, WILEY VCH, WEINHEIM, DE, vol. 242,
  November 1996 (1996-11), pages 123-138,
  XP000689751 ISSN: 0003-3146**
 • **John J. Florio and Daniel J. Miller, editors:
  "Handbook of Coatings Additives, Second
  Edition", 2004, Marcel Dekker,Inc, New York
  ISBN: 0-8247-5626-6 pages 159-162,**
 • **STEEMAN ET AL.: PROCEEDINGDS 52ND
  INTERNATIONAL WIRE AND CABLE
  SYMPOSIUM, 10 November 2003 (2003-11-10),
  pages 246-251, XP007917119,**
 • **JOHN J. FLORIO; DANIEL J. MILLER, EDITORS:
  'Handbook of Coatings Additives, Second
  Edition', 2004, MARCEL DEKKER,INC, NEW
  YORK, ISBN 0-8247-5626-6 pages 159 - 162**

Remarks:
The file contains technical information submitted after
the application was filed and not included in this
specification

EP 2 091 882 B1

## Description

This patent application claims priority to U.S. Provisional Patent Application No. 60/874,731, "BJ Radiation Curable Primary Coating for Optical Fiber", filed December 14, 2006.

## FIELD OF THE INVENTION

The present invention relates to radiation curable coatings for use as a Primary Coating for optical fibers, optical fibers coated with said coatings and methods for the preparation of coated optical fibers.

## BACKGROUND OF THE INVENTION

Optical fibers are typically coated with two or more radiation curable coatings. These coatings are typically applied to the optical fiber in liquid form, and then exposed to radiation to effect curing. The type of radiation that may be used to cure the coatings should be that which is capable of initiating the polymerization of one or more radiation curable components of such coatings. Radiation suitable for curing such coatings is well know, and includes ultraviolet light (hereinafter "UV") and electron beam ("EB"). The preferred type of radiation for curing coatings used in the preparation of coated optical fiber is UV.

The coating which directly contacts the optical fiber is called the Primary Coating, and the coating that covers the Primary Coating is called the Secondary Coating. It is known in the art of radiation curable coatings for optical fibers that Primary Coatings are advantageously softer than Secondary Coatings. One advantage flowing from this arrangement is enhanced resistance to microbends.

Microbends are sharp but microscopic curvatures in an optical fiber involving local axial displacements of a few micrometers and spatial wavelengths of a few millimeters. Microbends can be induced by thermal stresses and/or mechanical lateral forces. When present, microbends attenuate the signal transmission capability of the coated optical fiber. Attenuation is the undesirable reduction of signal carried by the optical fiber. The relatively soft Primary Coating provides resistance to microbending of the optical fiber, thereby minimizing signal attenuation. The relatively harder Secondary Coating provides resistance to handling forces such as those encountered when the coated fiber is ribboned and/or cabled.

Previously described Radiation Curable Coatings suitable for use as a Primary Coating for Optical Fiber include the following:

Published Chinese Patent Application No. CN16515331, "Radiation Solidification Paint and Its Application", assigned to Shanghai Feikai Photoelectric, inventors: Jibing Lin and Jinshan Zhang, describes and claims a radiation curable coating, comprising oligomer, active diluent, photoinitiator, thermal stabilizer, selective adhesion promoter, in which a content of the oligomer is between 20% and 70% (by weight, the following is the same), a content of the other components is between 30% and 80%; the oligomer is selected from (meth) acrylated polyurethane oligomer or a mixture of (meth) acrylated polyurethane oligomer and (meth) acrylated epoxy oligomer; wherein said (meth) acrylated polyurethane oligomer is prepared by using at least the following substances:

(1) one of polyols selected from polyurethane polyol, polyamide polyol, polyether polyol, polyester polyol, polycarbonate polyol, hydrocarbon polyol, polysiloxane polyol, a mixture of two or more same or different kinds of polyol (s);

(2) a mixture of two or more diisocyanates or Polyisocyanates;

(3) (meth) acrylated compound containing one hydroxyl capable of reacting with isocyanate.

Example 3 of Published Chinese Patent Application No. CN16515331 is the only Example in this published patent application that describes the synthesis of a radiation curable coating suitable for use as a Radiation Curable Primary Coating. The coating synthesized in Example 3 has an elastic modulus of 1.6 MPa.

The article, "UV-CURED POLYURETHANE-ACRYLIC COMPOSITIONS AS HARD EXTERNAL LAYERS OF TWO-LAYER PROTECTIVE COATINGS FOR OPTICAL FIBRES", authored by W. Podkoscielny and B. Tarasiuk , Polim.Tworz.Wielk, Vol. 41, Nos. 7/8, p.448-55, 1996, NDN- 131-0123-9398-2, describes studies of the optimization of synthesis of UV-cured urethane-acrylic oligomers and their use as hard protective coatings for optical fibers. Polish-made oligoetherols, diethylene glycol, toluene diisocyanate (Izocyn T-80) and isophorone diisocyanate in addition to hydroxyethyl and hydroxypropyl methacrylates were used for the synthesis. Active diluents (butyl acrylate, 2-ethylhexyl acrylate and 1,4-butanediol acrylate or mixtures of these) and 2,2-dimethoxy-2-phenylacetophenone as a photoinitiator were added to these urethane-acrylic oligomers which had polymerization-active double bonds. The compositions were UV-irradiated in an oxygen-free atmosphere. IR spectra of the compositions were recorded, and some physical and chemical and mechanical properties (density, molecular weight, viscosity as a function of temperature, refractive index, gel content, glass transition temperature, Shore hardness, Young's modulus, tensile strength, elongation at break, heat resistance and water vapor diffusion coefficient) were determined before and after curing.

The article, "PROPERTIES OF ULTRAVIOLET CURABLE POLYURETHANE-ACRYLATES", authored by M. Koshiba; K.K,S. Hwang; S.K. Foley.; D.J. Yarusso; and S. L. Cooper, published in J.Mat.Sci., 17,No. 5,May 1982,p. 1447-58; NDN- 131-0063-1179-2; described a study that was made of the relationship between the chemical structure and physical properties of UV cured polyurethane-acrylates based on isophorone diisocyanate and TDL The two systems were prepared with varying soft segment molecular weight and cross linking agent content. Dynamic mechanical test results showed that one- or two-phase materials might be obtained, depending on soft segment molecular weight. As the latter increased, the polyol Tg shifted to lower temperatures. Increasing using either N-vinyl pyrrolidone (NVP) or polyethylene glycol diacrylate (PEGDA) caused an increase in Young's modulus and ultimate tensile strength. NVP cross linking increased toughness in the two-phase materials and shifted the high temperature Tg peak to higher temperatures, but PEGDA did not have these effects. Tensile I properties of the two systems were generally similar.

US-B-6 630 242 describes radiation-curable compositions for optical fibre coatings. Example 11 of this document describes the preparation of an inner primary coating (also known as primary coating) from a coating composition that has only two diluents and a polyether aromatic urethane acrylate oligomer containing 21 % of isobornyl acrylate and 2 % of lauryl acrylate. This document is silent with respect to the molecular weight of the oligomer.

Typically in the manufacture of radiation curable coatings for use on Optical Fiber, isocyanates are used to make urethane oligomers. In many references, including U.S. Patent No. 7,135,229, "RADIATION-CURABLE COATING COMPOSITION". Issued November 14, 2006, assigned to DSM IP Assets B.V., column 7, lines 10-32 the following teachings is provided to guide the person of ordinary skill in the art how to synthesize urethane oligomer Polyisocyanates suitable for use in making compositions of the present invention can be aliphatic, cycloaliphatic or aromatic and include diisocyanates, such as 2,4-toluene diisocyanate, 2,6-toluene diisocyanate, 1,3-xlylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethanc diisocyanate, 3,3'-dimethylphenylene diisocyanate, 4,4'-biphenylene diisocyanate, 1,6-hexane diisocyanate, isophorone diisocyanate, methylenebis(4-cyclohexyl)isocyanate, 2,2,4-trimethylhexamethylene diisocyanate, bis(2-isocyanate-ethyl)fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethylxylylene diisocyanate and 2,5(or 6)-bis(isocyanatomethyl)-bicyclo[2.2.1]heptane. Among these diisocyanates, 2,4-toluene diisocyanate, isophorone diisocyanate, xylylene diisocyanate, and methylenebis(4-cyclohexylisocyanate) are particularly preferred. These diisocyanate compounds are used either individually or in combination of two or more.

While a number of Primary Coatings are currently available, it is desirable to provide novel Primary Coatings which have improved manufacturing and/or performance properties relative to existing coatings.

SUMMARY OF THE INVENTION

A first aspect of the instant claimed invention is a radiation curable Primary Coating composition comprising:

    A) an oligomer,
    B) a first diluent monomer;
    C) a second diluent monomer;
    D) a third diluent monomer;
    E) a first light stabilizer;
    F) a first photoinitiator;
    G) a second photoinitiator;
    H) an antioxidant;
    I) a second light stabilizer;and
    J) an adhesion promoter;

wherein said oligomer is the reaction product of:

    i) hydroxyl-containing (meth)acrylate;
    ii) an isocyanate;
    iii) a polyether polyol;
    iv) a polymerization inhibitor;
    v) a catalyst; and a
    vi) diluent;

wherein said oligomer has a number average molecular weight of from at least 4000 g/mol to less than or equal to 15,000 g/mol; and

wherein said catalyst is selected from the group consisting of copper naphthenate; cobalt naphthenate; zinc naphthenate; triethylamine; triethylenediamine; 2-methyltriethyleneamine; dibutyl tin dilaurate; metal carboxylates ; sulfonic acids ; amino or organo-base catalysts ; alkoxides of zirconium and titanium ; and ionic liquid phosphonium, imidazolium and pyridinium salts and

wherein a cured film of said radiation curable Primary Coating composition has a peak tan δ Tg measured as defined herein of from -25°C to -55°C; and a modulus of from 0.85 MPa to 1.10 MPa.

A second aspect of the instant claimed invention is a process for coating an optical fiber, the process comprising:

a) operating a glass drawing tower to produce a glass optical fiber; and
b) coating said glass optical fiber with the Radiation Curable Primary Coating Composition of the first aspect of the instant claimed invention.

A third aspect of the instant claimed invention is a process for coating an optical fiber, the process comprising:

a) operating a glass drawing tower at a line speed of between 750 meters/minute and 2100 meters/minute to produce a glass optical fiber, and
b) coating said glass optical fiber with the Radiation Curable Primary Coating Composition of the first aspect of the instant claimed invention

A

A fourth aspect of the instant claimed invention is wire coated with a first and second layer, wherein the first layer is a cured Radiation Curable Primary Coating that is in contact with the outer surface of the wire and the second layer is a cured radiation curable Secondary Coating in contact with the outer surface of the Primary Coating,

wherein the cured Primary Coating on the wire has the following properties after initial cure and after one month aging at 85°C and 85% relative humidity:

A) a % RAU of from 84% to 99%;
B) an in-situ modulus of between 0.15 MPa and 0.60 MPa; and
C) a Tube Tg, of from -25°C to -55°C;
wherein the curable Primary Coating is the foregoing radiation curable Primary Coating composition.

A further aspect of the present invention provides an optical fiber coated with a first and second layer, wherein the first layer is a cured radiation curable Primary Coating of the instant claimed invention that is in contact with the outer surface of the optical fiber and the second layer is a cured radiation curable Secondary Coating in contact with the outer surface of the Primary Coating,

wherein the cured Primary Coating on the optical fiber has the following properties after initial cure and after one month aging at 85°C and 85% relative humidity:

A) a % RAU of from 84% to 99%;
B) an in-situ modulus of between 0.15 MPa and 0.60 MPa; and
C) a Tube Tg, of from -25°C to -55°C.

DETAILED DESCRIPTION OF THE PREFERRED EMBODIMENTS

Throughout this patent application, the following abbreviations have the indicated meanings:

| A-189 | γ-mercaptopropyltrimethoxysilane, available from General Electric |
|---|---|
| BHT | 2,6-di-tert-butyl-p-cresol, available from Fitz Chem |
| CAS | means Chemical Abstracts Registry Number |
| Chivacure 184 | 1-hydroxycyclohexyl phenyl ketone, available from Chitech |
| Chivacure TPO | 2,4,6-Trimethylbenzoyldiphenylphosphine oxide available from Chitech |
| HEA | hydroxyethyl acrylate, available from BASF |
| Irganox 1035 | thiodiethylene bis (3,5-di-tert-butyl-4-hydroxyhydrocinnamate), available from Ciba |
| Lowilite 20 | 2-hydroxy-4-methoxybenzophenone, available from Great Lakes Chemical |

(continued)

| P2010 | polypropylene glycol (2000 MW), available from BASF |
| SR 349 BPAEDA | ethoxylated bisphenol A diacrylate, available from Sartomer |
| SR 395 | isodecyl acrylate, available from Sartomer |
| SR 504 D | ethoxylated nonylphenol acrylate, available from Sartomer |
| IPDI | Isophorone diisocyanate, available from Bayer |
| TDI | An 80/20 blend of the 2,4- and 2,6- isomer of toluene diisocyanate, available from BASF |
| TDS | 100% 2,4-isomer of toluene diisocyanate available from Bayer |
| Tinuvin 123 | N-substituted hindered amine, available from Ciba |

One aspect of the present invention is a radiation curable Primary Coating composition comprising:

A) an oligomer;
B) a first diluent monomer;
C) a second diluent monomer;
D) a third diluent monomer;
E) a first light stabilizer;
F) a first photoinitiator;
G) a second photoinitiator;
H) an antioxidant;
I) a second light stabilizer; and
J) an adhesion promoter;

wherein said oligomer is the reaction product of:

i) hydroxyl-containing (meth)acrylate;
ii) an isocyanate;
iii) a polyether polyol;
iv) a polymerization inhibitor,
v) a catalyst; and a
vi) diluent;

wherein said oligomer has a number average molecular weight of from at least 4000 g/mol to less than or equal to 15,000 g/mol; and

wherein said catalyst is selected from the group consisting of copper naphthenate; cobalt naphtenate; zinc naphthenate; triethylamine; triethylenediamine; 2-methyltriethyleneamine; dibutyl tin dilaurate; metal carboxylates, including, but not limited to: organobismuth catalysts such as bismuth neodecanoate; zinc neodecanoate; zirconium neodecanoate; zinc 2-ethylhexanoate; sulfonic acids, including but not limited to dodecylbenzene sulfonic acid, methane sulfonic acid; amino or organo-base catalysts, including, but not limited to: 1,2-dimethylimidazole and diazabicyclooctane; triphenyl phosphine; alkoxides of zirconium and titanium, including, but not limited to Zirconium butoxide and Titanium butoxide; and Ionic liquid phosphonium salts, such as tetradecyl (trihexyl) phosphonium chloride; and

wherein a cured film of said radiation curable Primary Coating composition has a peak tan $\delta$ Tg of from -25°C to -55°C; and a modulus of from 0.85 MPa to 1.10 MPa.

The oligomer of the present invention is a urethane (meth)acrylate oligomer, comprising a (meth)acrylate group, urethane groups and a backbone. The term (meth)acrylate includes acrylates as well as methacrylate functionalities. The backbone is preferably derived from use of a polyol which has been reacted with a diisocyanate and hydroxy alkyl (meth)acrylate, preferably hydroxyethylacrylate.

Desirably, the oligomer is prepared by reacting a hydroxyl-containing acrylate (e.g. HEA); an isocyanate (e.g. an aromatic isocyanate, TDI or TDS); a polyether polyol (Acclaim 4200); an inhibitor (e.g. BHT); a catalyst (e.g. DBTDL); and a reactive monomer diluent (e.g. SR 395).

The hydroxyl-containing (meth)acrylate component useful in the preparation of the oligomer may be of any suitable type, but is desirably a hydroxy alkyl (meth)acrylate, such as hydroxyethyl acrylate (HEA), or an acrylate selected from the group consisting of polypropylene glycol monoacrylate (e.g. PPA6), tripropylene glycol monoacrylate (TPGMA), caprolactone acrylates, and pentaerythritol triacrylate (e.g., SR-444). HEA is preferred.

When preparing the oligomer, the acrylate component may be added to the oligomer reaction mixture in any suitable amount, desirably from 0.2 wt.% to 25 wt.%, more desirably from 0.6 wt% to 10 wt %, and preferably from 1 wt. % to 5 wt %, all based on the weight of the oligomer reactant mixture.

The isocyanate may be of any suitable type, e.g., aromatic or aliphatic, but desirably comprises 2,4-TDI and, optionally, 2,6-TDI. Preferably, at least 90 wt.%, more preferably at least 95 wt-%, and most preferably at least 99 wt. % of the isocyanate is 100% of the 2,4-isomer of TDI (TDS).

When preparing the oligomer, the isocyanate component may be added to the oligomer reaction mixture in an amount ranging from 0.4 wt.% to 9.6 wt.%, desirably from 1.2 wt.% to 8.8 wt. %, and preferably from 2 to 8 wt.%, all based on the weight percent of the oligomer mixture.

A variety of polyether polyols may be used in the preparation of the oligomer. There are no specific limitations to the manner of polymerization of the structural units in these polyols; any of random polymerization, block polymerization, or graft polymerization is acceptable.

The molecular weight of the polyether polyols suitable for use in the preparation of the oligomer may be 1,000 or higher, desirably 1500 or higher, and even more desirably 2000 or higher. Desirably, the MW may be 8,000 or lower, and more desirably 6,000 or lower.

Examples of suitable polyether polyols and hydroxyl group-containing (meth)acrylates are disclosed in WO 00/18696. Preferably, polypropylene glycol (MW = 4,200) (e.g., Acclaim 4200 available from Bayer) is used.

When preparing the oligomer, the polyether polyol component may be added to the oligomer reaction mixture in any suitable amount, desirably ranging from 44 wt.% to 90 wt. %, more desirably from 50 wt.% to 84 wt.%, and preferably from 55 to 75 wt.%, all based on the weight percent of the oligomer mixture.

A reactive monomer (also referred to as a diluent) is also present in the reactive composition used to provide the oligomer. A variety of diluents are known in the art and may be used in the preparation of the oligomer including, without limitation, alkoxylated alkyl substituted phenol acrylate, such as ethoxylated nonyl phenol acrylate (ENPA, e.g., Photomer 4066, available from Cognis), propoxylated nonyl phenol acrylate (PNPA), vinyl monomers such as vinyl caprolactam (nVC), isodecyl acrylate (IDA. e.g., SR 395 available from Sartomer), 2-ethylhexyl acrylate (EHA), diethyleneglycolethyl- hexylacrylate (DEGEHA), isobornyl acrylate (IBOA), tripropyleneglycoldiacrylate (TPGDA), hexanediol diacrylate (HDDA), trimethylolpropane triacrylate (TMPTA), alkoxylated trimethylolpropane triacrylate, and alkoxylated bisphenol A diacrylate such as ethoxylated bisphenol A diacrylate (EO-BPADA). Preferably isodecyl acrylate (e.g., SR 395 available from Sartomer) is used as a diluent.

When preparing the oligomer, the diluent monomer component may be added to the oligomer reaction mixture in any suitable amount, desirably from 4 wt.% to 8.4 wt.%, more desirably from 4.5 wt.% to 7.7 wt.%; and more preferably from 5 to 7 wt.%, all based on the weight of the oligomer reactant mixture.

In the reaction which provides the oligomer a catalyst is used, such as a urethanization catalyst. Catalysts in the art of synthesizing urethane based oligomers for use in radiation curable coatings for optical fiber are known in the art. Suitable catalysts may be selected from the group consisting of copper naphthenate: cobalt naphthenate; zinc naphthenate; triethylamine; triethylenediamine; 2-methyltriethyleneamine; dibutyl tin dilaurate (DBTDL); metal carboxylates, including, but not limited to: organobismuth catalysts such as bismuth neodecanoate, CAS 34364-26-6; zinc neodecanoate, CAS 27253-29-8; zirconium neodecanoate, CAS 39049-04-2; and zinc 2-ethylhexanoate, CAS 136-53-8; sulfonic acids, including but not limited to dodecylbenzene sulfonic acid, CAS 27176-87-0; and methane sulfonic acid, CAS 75-75-2; amino or organo-base catalysts, including, but not limited to: 1,2-dimethylimidazole, CAS 1739-84-0 (very weak base); and diazabicyclo[2.2.2]octane (DABCO), CAS 280-57-9 (strong base); and triphenyl phosphine (TPP); alkoxides of zirconium and titanium, including, but not limited to zirconium butoxide, (tetrabutyl zirconate) CAS 1071-76-7; and titanium butoxide, (tetrabutyl titanate) CAS 5593-70-4; and ionic liquid phosphonium, imidazolium, and pyridinium salts, such as, but not limited to, trihexyl(tetradecyl)phosphonium hexafluorophosphate, CAS No. 374683-44-0; 1-butyl-3-methylimidazolium acetate, CAS No. 284049-75-8; and N-butyl-4-methylpyridinium chloride, CAS No. 125652-55-3; and tetradecyl (trihexyl) phosphonium chloride, commercially available as Cyphosil 101 .

The preferred catalyst is DBTDL

The catalyst may be used in the free, soluble, and homogeneous state, or may be tethered to inert agents such as silica gel, or divinyl crosslinked macroreticular resins, and used in the heterogeneous state to be filtered at the conclusion of oligomer synthesis.

When preparing the oligomer, the catalyst component may be added to the oligomer reaction mixture in any suitable amount, desirably from 0.036wt% to 0.072 wt.% and preferably from 0.03 to 0.06 wt.%.

The preparation of the oligomer is conducted in the presence of a polymerization inhibitor which is used to inhibit the polymerization of acrylate during the reaction. A variety of inhibitors are known in the art and may be used in the preparation of the oligomer including, without limitation, butylated hydroxytoluene (BHT), hydroquinone and derivatives thereof such as methylether hydroquinone and 2,5-dibutyl hydroquinone; 3,5-di-tert-butyl-4-hydroxytoluene; methyl-di-tert-butylphenol; 2,6-di-tert-butyt-p-cresol; and the like. The preferred polymerization inhibitor is BHT.

When preparing the oligomer, the inhibitor component may be added to the oligomer reaction mixture in any suitable amount, desirably from 0.04 wt.% to 0.24 wt.%, more desirably from about from 0.045 wt.% to 0.22 wt.%, and preferably from 0.05 to 0.20 wt.%.

The preparation of the oligomer may be under taken by any suitable process, but preferably proceeds in a outside-in synthesis wherein the isocyanate component is reacted with the acrylate, and thereafter reacting the resulting reaction product with the polyol. More specifically, and preferably, some of the isocyanate, inhibitor and urethanisation catalyst are mixed well, then the acrylate (e.g, HEA) is added in a controlled manner so that the reaction temperature does not exceed 40 °C. After addition of the remainder of the acrylate component and the polyol, the reaction is allowed to proceed to completion.

Generally, the oligomer reaction is carried out at a temperature from 10°C to 90°C, and preferably from 30 °C to 80°C.

The oligomer comprised in the radiation curable Primary Coating composition of the instant claimed invention has a number average molecular weight of at least 4000g/mol. An embodiment of the instant claimed invention has an oligomer which has a number average molecular weight of at least 5000g/mol. An embodiment of the instant claimed invention has an oligomer which has a number average molecular weight of at least 6000g/mol.

The oligomer comprised in the radiation curable Primary Coating composition of the instant claimed invention has a number average molecular weight of less than or equal to 15.000g/mol. An embodiment of the instant claimed invention has an oligomer which a number average molecular weight of less than or equal to 1000g/mol. An embodiment of the instant claimed invention has an oligomer which has a number average molecular weight of less than or equal to 9000g/mol.

After the preparation of the oligomer, the radiation curable composition may be prepared. The amount of the oligomer in the curable composition may vary depending on the desired properties, but will desirably range from 59.2 wt.% to 88.8 wt.%, and preferably 74 wt.%, based on the weight percent of the radiation curable composition.

A first, a second, and a third reactive monomer diluent are also added to the curable composition. As mentioned previously, such diluent are well known in the art. Desirably, the diluents comprise a combination of SR 504 D. SR 349, and SR 395, preferably in about equal proportions. When used, SR 504D is present from 8 wt.% to 12 wt.%; SR 349 is present from 3 to 7 wt.%; and SR 395 is present from 4 to 8 wit.%, all based on the weight of the curable composition.

The curable composition also includes a first and a second light stabilizer. Such light stabilizers are well known in the art. The light stabilizer can be included in amounts ranging from 0.01 wt.% to 2 wt.% of the curable composition. Desirably, the first light stabilizer can be present in an amount of from 0.2 to 0.6 wt. %, and the second light stabilizer can be present in an amount of from 0.05 to 0.25 wt. %. Preferably, the first stabilizer is Tinuvin 123, while the second stabilizer is preferably Lowilite 20.

The curable composition also includes a first and a second photoinitiation. Such components are well known in the art. The photoinitiators can be included in amounts ranging from 1 wt.% to 8 wt.% of the curable composition. Desirably, the first photoinitiator is present in an amount of from 0.5 to 3 wt. %, and the second photoinitiator is present in an amount of from 0.5 to 3 wt. %. Preferably, the first photoinitiators is Chivacure TPO, while the second photoinitiators is preferably Chivacure 184.

A further component used in the curable composition is an antioxidant. Such components are well known in the art. The antioxidant component can be included in amounts ranging from 0.5 to 3 wt.%, and more preferably up to about 1.5 wt.%, of the curable composition. Preferably, the antioxidant is Irganox 1035.

Another component included in the curable composition is an adhesion promoter which, as its name implies, enhances the adhesion of the cured coating onto the optical fiber. Such components are well known in the art. The adhesion promoter may be included in amounts ranging from 0.2 wt. % to 2 wt.% of the curable composition, such as in amounts ranging from 0.5 wt. % to 2 wt.%, desirably 0.8 to 1.0 wt.%, of the curable composition. Preferably, the adhesion promoter is A-189.

In a preferred aspect of the present invention, the oligomer may be prepared from the following components:

Hydroxyl-containing acrylate (e,g., HEA): 1 to 5 wt %
Isocyanate (e.g., TDS): 2 to 8 wt %
Polyether Polyol (e.g., Acclaim 4200): 55 to 75 wt %
Polymerization Inhibitor (e,g., BHT): 0.05 to 0.20 wt %
Catalyst (e.g., DBTDL): 0.030 to 0.060 wt %
Diluent (e.g., SR 395): 5 to 7 wt.%

All exemplary formulations should be checked for accuracy, and to ensure that the total amount of all components equals 100%.

Examples of the present invention may be provided as follows:

| Primary Coating Oligomer | Wt.% | Wt.% | Wt.% |
|---|---|---|---|
| | Example 1 | Example 2 | Example 3 |
| Hydroxy-containing acrylate (HEA) | 1.84 | 1.84 | 1.84 |
| Isocyanate (TDS) | 4.14 | 4.14 | 4.14 |
| Acclaim 4200 | 62.11 | 62.11 | 62.11 |
| BHT | 0.061 | 0.061 | 0.061 |
| DBTDL | 0.034 | 0.034 | 0.034 |
| SR 395 | 5.81 | 5.81 | 5.81 |
| Radiation Curable Coating Composition | Wt.% | | |
| Primary Coating Oligomer | 74 | 75 | 76 |
| Diluent Monomer (SR 504 D) | about 10.4 wt. %. | 10.4 | 10.4 |
| Diluent Monomer (SR 349) | about 5.0 wt. %. | 5.0 | 5.0 |
| Diluent Monomer (SR 395) | about 6.0 wt. % | 6.0 | 6.0 |
| First Photoinitiator (Chivacure TPO) | .30 | .30 | .30 |
| Second Photoinitiator (Chivacure 184 | 1.00 | 1.00 | 1.00 |
| Antioxidant (Irganox 1035) | 0.75 | 0.75 | 0.75 |
| First Light Stabilizer (Tinuvin 123) | 0.4 | 0.4 | 0.4 |
| Second Light Stabilizer (Lowilite 20) | 0.15 | 0.15 | 0.15 |
| Adhesion Promoter (A-189) | 1.0 | 2.0 | 3.0 |

(these percentages are selected and adjusted as necessary to achieve an overall 100 wt.% of the composition).

The Primary Coating of the instant claimed invention is referred to as the BJ Primary Coating.

After the Primary Coating is prepared, it may be applied directly onto the surface of the optical fiber. Drawing is carried out using either wet on dry or wet on wet mode. Wet on dry mode means the liquid Primary Coating is applied wet, and then radiation is applied to cure the liquid Primary Coating to a solid layer on the wire. After the Primary Coating is cured, the Secondary Coating is applied and then cured as well. Wet on wet mode means the liquid Primary Coating is applied wet, then the Secondary Coating is applied wet and then both the Primary Coating and Secondary Coatings are cured.

The preferred radiation to be applied to effect the cure is Ultraviolet

If the Secondary Coating is clear rather than colored, a layer of ink coating may be applied thereon. If the Secondary Coating is colored, the ink coating layer is typically not applied onto the Secondary Coating. Regardless of whether the ink coating is applied, it is common practice to place a plurality of coated fibers alongside each other in a ribbon assembly, applying a radiation curable matrix coating thereto to hold the plurality of fibers in place in that ribbon assembly.

The following examples further illustrate the invention.

**EXAMPLES**

<u>Tensile Strength, Elongation and Modulus Test Method</u>: The tensile properties (tensile strength, percent elongation at break, and modulus) of cured samples of the radiation curable Primary Coatings for optical fiber are tested on films using a universal testing instrument. Instron Model 4201 equipped with a suitable personal computer and Instron software to yield values of tensile strength, percent elongation at break, and secant or segment modulus. Samples are prepared for testing by curing a 75-$\mu$m film of the material using a Fusion UV processor. Samples are cured at 1.0 J/cm$^2$ in a nitrogen atmosphere. Test specimens having a width of 1.27cm (0.5 inches) and a length of 12.7cm (5 inches) are cut from the film. The exact thickness of each specimen is measured with a micrometer. For relatively soft coatings (e.g., those with a modulus of less than 10 MPa), the coating is drawn down and cured on a glass plate and the individual specimens cut from the glass plate with a scalpel. A 0.9kg (2-lb) load cell is used in the Instron and modulus is calculated at 2,5% elongation with a least squares fit of the stress-strain plot. Cured films are conditioned at 23 $\pm$ 1° C and 50 $\pm$ 5% relative humidity for between 16 and 24 hours before testing.

For relatively harder coatings, the coating is drawn down on a Mylar film and specimens are cut with a Thwing Albert 1.27cm (0.5-inch) precision sample cutter. A 9 kg (20-lb) load cell is used in the Instron and modulus is calculated at 2.5% elongation from the secant at that point. Cured films are conditioned at 23 $\pm$ 1° C and 50 $\pm$ 5% relative humidity for sixteen hours prior to testing. For testing specimens, the gage length is 5.1cm (2-inches) and the crosshead speed is 2.54 cm/minute (1.00 inches/minute). All testing is done at a temperature of 23 $\pm$ 1°C and a relative humidity of 50 $\pm$ 5%. All measurements are determined from the average of at least 6 test specimens.

DMA Test Method: Dynamic Mechanical Analysis (DMA) is carried out on the test samples, using an RSA-II instrument manufactured by Rheometric Scientific Inc. A free film specimen (typically about 36 mm long, 12 mm wide, and 0.075 mm thick) is mounted in the grips of the instrument, and the temperature initially brought to 80° C and held there for about five minutes. During the latter soak period at 80° C, the sample is stretched by about 2.5% of its original length. Also during this time, information about the sample identity, its dimensions, and the specific test method is entered into the software (RSI Orchestrator) residing on the attached personal computer.

All tests are performed at a frequency of 1.0 radians, with the dynamic temperature step method having 2° C steps, a soak time of 5 to 10 seconds, an initial strain of about 0,001 ($\Delta L/L$), and with autotension and autostrain options activated. The autotension is set to ensure that the sample remained under a tensile force throughout the run, and autostrain is set to allow the strain to be increased as the sample passed through the glass transition and became softer. After the 5 minute soak time, the temperature in the sample oven is reduced in 20° C steps until the starting temperature, typically -80° C or -60° C, is reached. The final temperature of the run is entered into the software before starting the run, such that the data for a sample would extend from the glassy region through the transition region and well into the rubbery region.

The run is started and allowed to proceed to completion. After completion of the run, a graph of Tensile Storage Modulus=E', Tensile Loss Modulus = E", and tan $\delta$, all versus temperature, appeared on the computer screen. The data points on each curve are smoothed, using a program in the software. On this plot, three points representing the glass transition are identified:

1) The temperature at which E'=1000 MPa;

2) The temperature at which E'=100 MPa;

3) The temperature of the peak in the tan $\delta$ curve. If the tan $\delta$ curve contained more than one peak, the temperature of each peak is measured. One additional value obtained from the graph is the minimum value for E' in the rubbery region. This value is reported as the equilibrium modulus, $E_0$.

Measurement of Dry and Wet Adhesion Test Method: Determination of dry and wet adhesion is performed using an Instron model 4201 universal testing instrument. A 75-$\mu$m film is drawn down on a polished TLC glass plate and cured using a Fusion UV professor. Samples are cured at 1.0 J/cm$^2$ in a nitrogen atmosphere. The samples are conditioned at a temperature of 23 $\pm$ 1° C and a relative humidity of 50 $\pm$ 5% for a period of 7 days. After conditioning, eight specimens are cut 15 cm (6 inches) long and 2.54 cm (1 inch) wide with a scalpel in the direction of the draw down. A thin layer of talc is applied to four of the specimens. The first 2.54 cm (inch) of each sample is peeled back from the glass. The glass is secured to a horizontal support on the Instron with the affixed end of the specimen adjacent to a pulley attached to the support and positioned directly underneath the crosshead. A wire is attached to the peeled-back end of the sample, run along the specimen and then run through the pulley in a direction perpendicular to the specimen. The free end of the wire is clamped in the upper jaw of the Instron, which is then activated. The test is continued until the average force value, in grams force/2.54 cm (grams force/inch) became relatively constant. The crosshead speed is 25.4 cm/min (10 in/min). Dry adhesion is the average of the four specimens. The remaining four specimens are then conditioned at 23 $\pm$ 1° C and a relative humidity of 95 $\pm$ 5% for 24 hours. A thin layer of a polyethylene/water slurry is applied to the surface of the specimens. Testing is then performed as in the previous paragraph. Wet adhesion is the average of the four specimens.

Water Sensitivity Test Method: A layer of the composition is cured to provide a UV cured coating test strip, 3.8cm $\times$ 3.8cm $\times$ 15 $\mu$m (1.5 inch x 1.5 inch x 0.6 mils). The test strip is weighed and placed in a vial containing deionized water, which is subsequently stored for 3 weeks at 23° C. At periodic intervals, e.g. 30 minutes, 1 hour, 2 hours, 3 hours. 6 hours, 1 day, 2 days, 3 days, 7 days, 14 days, and 21 days, the test strip is removed from the vial and gently patted dry with a paper towel and reweighed. The percent water absorption is reported as 100*(weight after immersion-weight before immersion)/(weight before immersion). The peak water absorption is the highest water absorption value reached during the 3-week immersion period. At the end of the 3-week period, the test strip is dried in a 60° C oven for 1 hour, cooled in a desiccator for 15 minutes, and reweighed. The percent water extractables is reported as 100*(weight before immersion-weight after drying)/(weight before immersion). The water sensitivity is reported as |peak water absorption| + |water extractables|. Three test strips are tested to improve the accuracy of the test.

Refractive Index Test Method: The refractive index of the cured compositions is determined with the Becke Line method, which entails matching the refractive index of finely cut strips of the cured composition with immersion liquids of known refraction properties. The test is performed under a microscope at 23°C and with light having a wavelength of 589 nm.

Viscosity Test Method: The viscosity is measured using a Physica MC10 Viscometer. The test samples are examined and if an excessive amount of bubbles is present, steps are taken to remove most of the bubbles. Not all bubbles need to be removed at this stage, because the act of sample loading introduces some bubbles. The instrument is set up for the conventional Z3 system, which is used. The samples are loaded into a disposable aluminum cup by using the syringe to measure out 17 cm$^3$. The sample in the cup is examined and if it contains an excessive amount of bubbles, they are removed by a direct means such as centrifugation, or enough time is allowed to elapse to let the bubbles escape from the bulk of the liquid. Bubbles at the top surface of the liquid are acceptable. The bob is gently lowered into the liquid in the measuring cup, and the cup and bob are installed in the instrument. The sample temperature is allowed to equilibrate with the temperature of the circulating liquid by waiting five minutes. Then, the rotational speed is set to a desired value which will produce the desired shear rate. The desired value of the shear rate is easily determined by one of ordinary skill in the art from an expected viscosity range of the sample. The shear rate is typically 50 sec$^{-1}$ or 100 sec$^{-1}$. The instrument panel reads out a viscosity value, and if the viscosity value varied only slightly (less than 2% relative variation) for 15 seconds, the measurement is complete. If not, it is possible that the temperature had not yet reached an equilibrium value, or that the material is changing due to shearing. If the latter case, further testing at different shear rates will be needed to define the sample's viscous properties. The results reported are the average viscosity values of three test samples. The results are reported either in centipoises (cps) or milliPascal-seconds (mPa·s).

Two batches of a composition of the instant claimed invention are made and are tested.

|  | Example 1 | Example 2 |
|---|---|---|
| Viscosity, mPa·s, 25 °C | 5850 | 5600 |
| Tensile Strength. MPa | 0.85 | 0.66 |
| Elongation, % | 179 | 151 |
| Modulus, MPa | 0.98 | 0.96 |
| E' @ 1000 MPa (°C) | -58.9 | -59.0 |
| E' @ 100 MPa(°C) | -50.8 | -50.4 |

For BJ Primary Coating, a cured film of said radiation curable Primary Coating composition has a peak tan δ Tg of from -25°C to -55°C. An embodiment of said radiation curable Primary Coating compositions has a peak tan δ Tg of from -35°C to -55°C. Another embodiment of said radiation curable Primary Coating composition has a peak tan δ Tg of from -40°C to -55°C.

For BJ Primary Coating, a cured film of said Primary Coating composition has a modulus of from 0.85 MPa to 1.10 MPa. An embodiment of said radiation curable Primary Coating composition has a modulus of from 0.90 MPa to 1.00 MPa.

**DRAW TOWER SIMULATOR EXAMPLES**

Draw Tower Simulator Test Methods and Examples

Test Methods

Percent Reacted Acrylate Unsaturation for the Primary Coating abbreviated as % RAU Primary Test Method:

Degree of cure on the inside Primary Coating on an optical fiber or metal wire is determined by FTIR using a diamond ATR accessory. FTIR instrument parameters include: 100 co-added scans, 4 cm$^{-1}$ resolution, DTGS detector, a spectrum range of 4000 - 650 cm$^{-1}$. and an approximately 25% reduction in the default mirror velocity to improve signal-to-noise, Two spectra are required; one of the uncured liquid coating that corresponds to the coating on the fiber or wire and one of the inner Primary Coating on the fiber or wire. A thin film of contact cement is smeared on the center area of a 2.54 cm (1-inch) square piece of 76 μm (3-mil) Mylar film. After the contact cement becomes tacky, a piece of the optical fiber or wire is placed in it. Place the sample under a low power optical microscope. The coatings on the fiber or wire are sliced through to the glass using a sharp scalpel. The coatings are then cut lengthwise down the top side of the fiber or wire for approximately 1 centimeter, making sure that the cut is clean and that the outer coating does not fold into the Primary Coating. Then the coatings are spread open onto the contact cement such that the Primary Coating next to the glass or wire is exposed as a flat film. The glass fiber or wire is broken away in the area where the Primary Coating is exposed.

The spectrum of the liquid coating is obtained after completely covering the diamond surface with the coating. The liquid should be the same batch that is used to coat the fiber or wire if possible, but the minimum requirement is that it must be the same formulation. The final format of the spectrum should be in absorbance. The exposed Primary Coating on the Mylar film is mounted on the center of the diamond with the fiber or wire axis parallel to the direction of the infrared beam. Pressure should be put on the back of the sample to insure good contact with the crystal. The resulting spectrum should not contain any absorbances from the contact cement. If contact cement peaks are observed, a fresh sample should be prepared. It is important to run the spectrum immediately after sample preparation rather than preparing any multiple samples and running spectra when all the sample preparations are complete. The final format of the spectrum should be in absorbance.

For both the liquid and the cured coating, measure the peak area of both the acrylate double bond peak at 810 cm$^{-1}$ and a reference peak in the 750 - 780 cm$^{-1}$ region. Peak area is determined using the baseline technique where a baseline is chosen to be tangent to absorbance minima on either side of the peak. The area under the peak and above the baseline is then determined. The integration limits for the liquid and the cured sample are not identical but are similar, especially for the reference peak.

The ratio of the acrylate peak area to the reference peak area is determined for both the liquid and the cured sample. Degree of cure, expressed as percent reacted acrylate unsaturation (% RAU), is calculated from the equation below:

$$\% \, RAU = \frac{(R_L - R_F) \, x \, 100}{R_L}$$

where $R_L$ is the area ratio of the liquid sample and $R_F$ is the area ratio of the cured primary. <u>In-situ Modulus of Primary Coating Test Method</u>: The in-situ modulus of a Primary Coating on a dual-coated (soft Primary Coating and hard Secondary Coating) glass fiber or a metal wire fiber is measured by this test method. The detailed discussion on this test can be found in Steeman, P.A.M., Slot, J.J.M., Melick, N.G.H. van, Ven, A.A.F. van de, Cao, H. & Johnson, R. (2003), Mechanical analysis of the in-situ Primary Coating modulus test for optical fibers, in Proceedings 52nd International Wire and Cable Symposium (IWCS, Philadelphia, USA, November 10-13, 2003), Paper 41. For sample preparation, a short length (-2mm) of coating layer is stripped off using a stripping tool at the location - 2 cm from a fiber end. The fiber is cut to form the other end with 8 mm exactly measured from the stripped coating edge to the fiber end. The portion of the 8 mm coated fiber is then inserted into a metal sample fixture, as schematically shown in Figure 6 of the paper [1]. The coated fiber is embedded in a micro tube in the fixture; the micro tube consisted of two half cylindrical grooves; its diameter is made to be about the same as the outer diameter (~245μm) of a standard fiber. The fiber is tightly gripped after the screw is tightened; the gripping force on the Secondary Coating surface is uniform and no significant deformation occurred in the coating layer. The fixture with the fiber is then mounted on a DMA (Dynamic Mechanical Analysis) instrument: Rheometrics Solids Analyzer (RSA-II). The metal fixture is clamped by the bottom grip. The top grip is tightened, pressing on the top portion of the coated fiber to the extent that it crushed the coating layer. The fixture and the fiber must be vertically straight. The non-embedded portion of the fiber should be controlled to a constant length for each sample; 6 mm in our tests. Adjust the strain-offset to set the axial pretension to near zero (-1g ~ 1 g).

Shear sandwich geometry setting is selected to measure the shear modulus G of the Primary Coating. The sample width, W, of the shear sandwich test is entered to be 0.24 mm calculated according to the following equation:

$$W = \frac{(R_p - R_f)\pi}{Ln(R_p / R_f)}$$

where $R_f$ and $R_p$ are bare fiber and Primary Coating outer radius respectively. The geometry of a standard fiber, $R_f$ = 62.5μm and $R_p$=92.5μm, is used for the calculation. The sample length of 8mm (embedded length) and thickness of 0.03 mm (Primary Coating thickness) are entered in the shear sandwich geometry. The tests are conducted at room temperature (-23°C). The test frequency used is 1.0 radian/second. The shear strain ε is set to be 0.05. A dynamic time sweep is run to obtain 4 data points for measured shear storage modulus G. The reported G is the average of all data points.

This measured shear modulus G is then corrected according to the correction method described in the paper [1]. The correction is to include the glass stretching into consideration in the embedded and the non-embedded parts. In the correction procedures, tensile modulus of the bare fiber ($E_f$) needs to be entered. For glass fibers, $E_f$ = 70GPa. For the wire fibers where stainless steel S314 wires are used, $E_f$ = 120GPa. The corrected G value is further adjusted by using the actual $R_f$ and $R_p$ values. For glass fibers, fiber geometry including $R_f$ and $R_p$ values is measured by PK2400 Fiber Geometry System. For wire fibers, $R_f$ is 65 μm for the 130 μm diameter stainless steel S314 wires used; $R_p$ is measured under microscope. Finally, the in-situ modulus E (tensile storage modulus) for Primary Coating on fiber is calculated according to E = 3G. The reported E is the average of three test samples.

<u>In-situ T$_g$ Measurement Of Primary and Secondary Coatings Test Method:</u> The glass transition temperatures (Tg) of primary and Secondary Coatings on a dual-coated glass fiber or a metal wire fiber are measured by this method. These glass transition temperatures are referred to as "Tube Tg".

For sample preparation, strip -2 cm length of the coating layers off the fiber as a complete coating tube from one end of the coated fiber by first dipping the coated fiber end along with the stripping tool in liquid $N_2$ for at least 10 seconds and then strip the coating tube off with a fast motion while the coating layers are still rigid.

A DMA (Dynamic Mechanical Analysis) instrument: Rheometrics Solids Analyzer (RSA-II) is used. For RSA-II, the gap between the two grips of RSAII can be expanded as much as 1 mm. The gap is first adjusted to the minimum level by adjusting strain offset. A simple sample holder made by a metal plate folded and tightened at the open end by a screw is used to tightly hold the coating tube sample from the lower end. Slide the fixture into the center of the lower grip and tighten the grip. Using tweezers to straighten the coating tube to upright position through the upper grip. Close and tighten the upper grip. Close the oven and set the oven temperature to a value higher than the $T_g$ for Secondary Coating or 100° C with liquid nitrogen as temperature control medium. When the oven temperature reached that temperature, the strain offset is adjusted until the pretension was in the range of 0 g to 0.3 g.

Under the dynamic temperature step test of DMA, the test frequency is set at 1.0 radian/second; the strain is 5E-3; the temperature increment is 2° C and the soak time is 10 seconds. The geometry type is selected as cylindrical. The geometry setting was the same as the one used for secondary in-situ modulus test. The sample length is the length of the coating tube between the upper edge of the metal fixture and the lower grip, 11 mm in our test. The diameter (D) is entered to be 0.16 mm according to the following equation:

$$D = 2 \times \sqrt{R_s{}^2 - R_p{}^2}$$

where $R_s$ and $R_p$ are secondary and Primary Coating outer radius respectively. The geometry of a standard fiber, $R_s$ = 122.5 $\mu$m and $R_p$= 92.5 $\mu$m, is used for the calculation.

A dynamic temperature step test is run from the starting temperature (100°C in our test) till the temperature below the Primary Coating $T_g$ or -80°C. After the run, the peaks from tan $\delta$ curve are reported as Primary Coating Tg (corresponding to the lower temperature) and Secondary Coating $T_g$ (corresponding to the higher temperature). Note that the measured glass transition temperatures, especially for primary glass transition temperature, should be considered as relative values of glass transition temperatures for the coating layers on fiber due to the tan $\delta$ shift from the complex structure of the coating tube.

**Draw Tower Simulator Examples**

Various compositions of the instant claimed Primary Coating and a commercially available radiation curable Secondary Coating are applied to wire using a Draw Tower Simulator. The wire is run at five different line speeds, 750 meters/minute, 1200 meters/minute, 1500 meters/minute, 1800 meters/minute and 2100 meters/minute,

Drawing is carried out using either wet on dry or wet on wet mode. Wet on dry mode means the liquid Primary Coating is applied wet, and then the liquid Primary Coating is cured to a solid layer on the wire. After the Primary Coating is cured, the Secondary Coating is applied and then cured as well. Wet on wet mode means the liquid Primary Coating is applied wet, then the Secondary Coating is applied wet and then both the Primary Coating and Secondary Coatings are cured.

Multiple runs are conducted with different compositions of the instant claimed Primary Coating and a commercially available radiation curable Secondary Coating. The cured Primary Coating on the fiber is tested for initial %RAU, initial in-situ modulus and initial Tube Tg. The coated wire is then aged for one month at 85°C and 85% relative humidity. The cured Primary Coating on the wire is then aged for one month and tested for %RAU, in-situ modulus and aged Tube Tg.

Set-up conditions for the Draw Tower Simulator.

- Zeidl dies are used. S99 for the 1° and S105 for the 2°.
- 750, 1000, 1200, 1500, 1800, and 2100 m/min are the speeds.
- 5 lamps are used in the wet on dry process and 3 lamps are used in the wet on wet process.

- (2) 93W/cm$^2$(600 W/in$^2$) D Fusion UV lamps are used at 100% for the 1° coatings.
- (3) 93 W/cm$^2$ (600 W/in$^2$) D Fusion UV lamps are used at 100% for the 2° coatings.

- Temperatures for the two coatings are 30°C. The dies are also set to 30°C.
- Carbon dioxide level is 7 liters/min at each die.
- Nitrogen level is 20 liters/min at each lamp.
- Pressure for die 1° coating is 1 bar at 25 m/min and goes up to 3 bar at 1000 m/min.
- Pressure for the 2° coating is 1 bar at 25 m/min and goes up to 4 bar at 1000 m/min.

The cured radiation curable Primary Coating of the instant claimed invention is found to have the following properties on wire:

| Line Speed (m/min) | % RAU Primary (Initial) | % RAU Primary (1 month) |
|---|---|---|
| 750 | 96 to 99 | 92 to 96 |
| 1200 | 95 to 99 | 92 to 95 |
| 1500 | 88 to 93 | 92 to 96 |
| 1800 | 89 to 93 | 89 to 93 |
| 2100 | 84 to 88 | 88 to 92 |

| Line Speed (m/min) | In-situ Modulus Primary (MPa) | In-situ Modulus Primary (MPa) (1 month) |
|---|---|---|
| 750 | 0.30 to 0.60 | 0.29 to 0.39 |
| 1200 | 0.25 to 0.35 | 0.25 to 0.35 |
| 1500 | 0.17 to 0.28 | 0.25 to 0.35 |
| 1800 | 0.15 to 0.25 | 0.20 to 0.30 |
| 2100 | 0.15 to 0.17 | 0.14 to 0.24 |

| Line Speed (m/min) | Primary Tube Tg values (°C) (initial) | Primary Tube Tg values (°C) (1 month) |
|---|---|---|
| 750 | -47 to -52 | -48 to -52 |
| 1200 | -25 to -51 | -48 to -52 |
| 1500 | -49 to -51 | -46 to -50 |
| 1800 | -47 to -51 | -48 to -52 |
| 2100 | -49 to -55 | -48 to -52 |

Therefore it is possible to describe and claim a wire coated with a first and second layer, wherein the first layer is a cured radiation curable Primary Coating of the instant claimed invention that is in contact with the outer surface of the wire and the second layer is a cured radiation curable Secondary Coating in contact with the outer surface of the Primary Coating,

wherein the cured Primary Coating on the wire has the following properties after initial cure and after one month aging at 85°C and 85% relative humidity:

    A) a % RAU of from 84% to 99%;
    B) an in-situ modulus of between 0.15 MPa and 0.60 MPa; and
    C) a Tube Tg, of from -25°C to -55°C.

Using this information it is possible to describe and claim an optical fiber coated with a first and second layer, wherein the first layer is a cured radiation curable Primary Coating of the instant claimed invention that is in contact with the outer surface of the optical fiber and the second layer is a cured radiation curable Secondary Coating in contact with the outer surface of the Primary Coating,

wherein the cured Primary Coating on the fiber has the following properties after initial cure and after one month aging at 85°C and 85% relative humidity:

A) a % RAU of from 84% to 99%;
B) an in-situ modulus of between 0.15 MPa and 0.60 MPa; and
C) a Tube Tg, of from -25°C to -55°C,

The radiation curable Secondary Coating may be any commercially available radiation curable Secondary Coating for optical fiber. Such commercially available radiation curable Secondary Coatings are available from DSM Desotech Inc., and others, including, but without being limited to Hexion, Luvantix and PhiChem.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including,' and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and docs not pose a limitation on the scope of the invention unless otherwise claimed. No language in the specification should be construed as indicating any non-claimed element as essential to the practice of the invention.

## Claims

1. A radiation curable Primary Coating composition comprising:

A) an oligomer;
B) a first diluent monomer;
C) a second diluent monomer;
D) a third diluent monomer;
E) a first light stabilizer;
F) a first photoinitiator;
G) a second photoinitiator;
H) an antioxidant;
I) a second light stabilizer; and
J) an adhesion promoter;
wherein said oligomer is the reaction product of:

i) hydroxyl-containing (meth)acrylate;
ii) an isocyanate;
iii) a polyether polyol;
iv) a polymerization inhibitor;
v) a catalyst; and a
vi) diluent;

wherein said oligomer has a number average molecular weight of from at least 4000 g/mol to less than or equal to 15,000 g/mol; and
wherein said catalyst is selected from the group consisting of copper naphthenate; cobalt naphthenate; zinc naphthenate; triethylamine; triethylenediamine; 2-methyltriethyleneamine; dibutyl tin dilaurate; metal carboxylates, sulphonic acids, amino or organo-base catalysts, alkoxides of zirconium and titanium, and ionic liquid phosphonium, imidazolium and pyridinium salts; and
wherein a cured film of said radiation curable Primary Coating composition has a peak tan $\delta$ Tg measured as defined herein of from -25 °C to -55 °C; and a modulus of from 0.85 MPa to 1.10 MPa.

2. A process for coating an optical fiber, the process comprising:

a) operating a glass drawing tower to produce a glass optical fiber; and

b) coating said glass optical fiber with the radiation curable Primary Coating composition of Claim 1.

3. The process of Claim 2 comprising operating the glass drawing tower at a line speed of between 750 meters/minute and 2100 meters/minute to produce a glass optical fiber.

4. A wire coated with a first and second layer, wherein the first layer is a cured radiation curable Primary Coating of Claim 1 that is in contact with the outer surface of the wire and the second layer is a cured radiation curable Secondary Coating in contact with the outer surface of the Primary Coating,
wherein the cured Primary Coating on the wire has the following properties after initial cure and after one month aging at 85 °C and 85 % relative humidity:

A) a % RAU of from 84% to 99 %;
B) an in-situ modulus of between 0.15 MPa and 0.60 MPa; and
C) a Tube Tg, of from -25 °C to -55 °C.

5. An optical fiber coated with a first and second layer, wherein the first layer is a cured radiation curable Primary Coating of Claim 1 that is in contact with the outer surface of the optical fiber and the second layer is a cured radiation curable Secondary Coating in contact with the outer surface of the Primary Coating,
wherein the cured Primary Coating on the optical fiber has the following properties after initial cure and after one month aging at 86 °C and 85 % relative humidity;

A) a % RAU of from 84 % to 99 %;
B) an in-situ modulus of between 0.15 MPa and 0.60 MPa; and
C) a Tube Tg, of from -26 °C to -66 °C.


**Patentansprüche**

1. Strahlungshärtbare Grundierbeschichtungszusammensetzung, die folgendes umfasst:

A) ein Oligomer,
B) ein erstes Verdünnungsmonomer,
C) ein zweites Verdünnungsmonomer,
D) ein drittes Verdünnungsmonomer,
E) einen ersten Lichtstabilisator,
F) einen ersten Photoinitiator,
G) einen zweiten Photoinitiator,
H) ein Antioxidationsmittel,
I) einen zweiten Lichtstabilisator und
J) einen Haftvermittler,
wobei das Oligomer das Reaktionsprodukt von Folgendem ist:

i) einem Hydroxyl-haltigen (Meth)acrylat,
ii) einem Isocyanat,
iii) einem Polyetherpolyol,
iv) einem Polymerisationsinhibitor,
v) einen Katalysator und
vi) einem Verdünnungsmittel,

wobei das Oligomer ein zahlengemitteltes Molekulargewicht von mindestens 4000 g/mol bis zu 15,000 g/mol, und wobei der Katalysator aus Kupfernaphthenat, Kobaltnaphthenat, Zinknaphthenat, Triethylamin, Triethylendiamin, 2-Methyltriethylenamin, Dibutylzinndilaurat, Metallcarboxylaten, Sulphonsäuren, Amino- oder Organo-basierten Katalysatoren, Alkoxiden des Zirkoniums und des Titans, und aus ionischen flüssigen Phosphonium-, Imidazolium- und Pyrridiniumsalzen ausgewählt ist, und wobei ein gehärteter Film der strahlungshärtbaren Grundierungsbeschichtungszusammensetzung einen Tan δ Tg-Peak, der wie hierin definiert gemessen wird, von -25°C bis -55°C und ein Modul von 0,85 MPa bis 1,10 MPa aufweist.

**2.** Verfahren zur Beschichtung einer optischen Faser, wobei das Verfahren Folgendes umfasst:

a) Betreiben eines Glaszugturms zur Herstellung einer optischen Glasfaser und
b) Beschichten der optischen Glasfaser mit der strahlungshärtbaren Grundierungsbeschichtungszusammensetzung gemäß Anspruch 1.

**3.** Das Verfahren gemäß Anspruch 2, welches Betreiben des Glaszugturms mit einer Fließgeschwindigkeit zwischen 750 m/min und 2100 m/min umfasst, um eine optische Glasfaser herzustellen.

**4.** Draht, der mit einer ersten und einer zweiten Schicht beschichtet ist, wobei die erste Schicht eine strahlungsgehärtete härtbare Grundierungsbeschichtung gemäß Anspruch 1 ist, die in Kontakt mit der äußeren Oberfläche des Drahtes steht, und die zweite Schicht eine strahlungsgehärtete härtbare zweite Beschichtung ist, die in Kontakt mit der äußeren Oberfläche der Grundierungsbeschichtung steht, wobei die ausgehärtete Grundierungsbeschichtung auf dem Draht die folgenden Eigenschaften nach dem ursprünglichen Aushärten und nach einem Monat Alterung bei 85°C und 85% relativer Luftfeuchtigkeit aufweist:

A) einen % RAU von 84% bis 99%,
B) ein in-situ-Modul zwischen 0,15 MPa und 0,60 MPa und
C) ein Tube Tg von -25°C bis -55°C.

**5.** Optische Faser, die mit einer ersten und zweiten Schicht beschichtet ist, wobei die erste Schicht eine strahlungsgehärtete härtbare Grundierungsbeschichtung gemäß Anspruch 1 ist, die in Kontakt mir der äußeren Oberfläche der optischen Faser steht, und die zweite Schicht eine strahlungsgehärtete härtbare zweite Beschichtung ist, die in Kontakt mit der äußeren Oberfläche der Grundierungsbeschichtung steht, wobei die ausgehärtete Grundierungsbeschichtung auf der optischen Faser die folgenden Eigenschaften nach dem ursprünglichen Aushärten und nach einem Monat Alterung bei 85°C und 85% relativer Luftfeuchtigkeit aufweist:

A) einen % RAU von 84% bis 99%,
B) ein in-situ-Modul zwischen 0,15 MPa und 0,60 MPa und
C) einen Tube Tg von -25°C bis -55°C.

**Revendications**

**1.** Composition de revêtement primaire durcissable par rayonnement comprenant :

A) un oligomère ;
B) un premier monomère de diluant ;
C) un second monomère de diluant ;
D) un troisième monomère de diluant ;
E) un premier stabilisateur à la lumière ;
F) un premier photoinitiateur ;
G) un second photoinitiateur ;
H) un antioxydant ;
I) un second stabilisateur à la lumière ; et
J) un promoteur d'adhérence ;
dans laquelle ledit oligomère est le produit de réaction de

i) un (méth)acrylate contenant un groupe hydroxyle ;
ii) un isocyanate ;
iii) un polyéther polyol ;
iv) un inhibiteur de polymérisation ;
v) un catalyseur ; et
vi) un diluant ;

dans laquelle ledit oligomère présente une masse moléculaire moyenne en nombre d'au moins 4 000 g/mol à moins de ou égale à 15 000 g/mol ; et dans laquelle ledit catalyseur est choisi dans le groupe constitué du naphthénate de cuivre ; du naphthénate de cobalt ; du naphthénate de zinc ; de la triéthylamine ; de la triéthylènediamine ; de la 2-méthyl-triéthylèneamine ; du dilaurate de dibutylétain ; de carboxylates de métaux, d'acides sulfoniques, de catalyseurs de base amino ou organo, d'alcoxydes de zirconium et de titane et de sels liquides ioniques de phosphonium, d'imidazolium et de pyridinium ; et

dans laquelle un film durci de ladite composition de revêtement primaire durcissable par rayonnement présente une Tg de tan δ de pic mesurée comme définie ici de -25°C à -55°C ; et un module de 0,85 MPa à 1,10 MPa.

2. Procédé pour le revêtement d'une fibre optique, le procédé comprenant les étapes consistant :

a) à faire fonctionner une tour d'étirage de verre pour produire une fibre optique de verre ; et
b) à revêtir ladite fibre optique de verre avec la composition de revêtement primaire durcissable par rayonnement de la revendication 1.

3. Procédé selon la revendication 2 comprenant le fonctionnement de la tour d'étirage de verre à une vitesse de ligne de 750 mètres/minute à 2 100 mètres/minute pour produire une fibre optique de verre.

4. Câble revêtu avec une première et une seconde couches, dans lequel la première couche est un revêtement primaire durcissable par rayonnement durci selon la revendication 1 qui est en contact avec la surface externe du câble et la seconde couche est un revêtement secondaire durcissable par rayonnement durci en contact avec la surface externe du revêtement primaire, dans lequel le revêtement primaire durci sur le câble présente les propriétés suivantes après durcissement initial et vieillissement d'un mois à 85°C et 85 % d'humidité relative :

A) une valeur de % RAU de 84 % à 99 % ;
B) un module in-situ de 0,15 MPa à 0,60 MPa ; et
C) une valeur Tube Tg de -25°C à -55°C.

5. Fibre optique revêtue avec une première et une seconde couches, dans laquelle la première couche est un revêtement primaire durcissable par rayonnement durci selon la revendication 1 qui est en contact avec la surface externe de la fibre optique et la seconde couche est un revêtement secondaire durcissable par rayonnement durci en contact avec la surface externe du revêtement primaire, dans laquelle le revêtement primaire durci sur la fibre optique présente les propriétés suivantes après durcissement initial et vieillissement d'un mois à 85°C et 85 % d'humidité relative :

A) une valeur de % RAU de 84 % à 99 % ;
B) un module in-situ de 0,15 MPa à 0,60 MPa ; et
C) une valeur Tube Tg de -25°C à -55°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 87473106 P
- CN 16515331
- US 6630242 B
- US 7135229 B
- WO 0018696 A

### Non-patent literature cited in the description

- **W. Podkoscielny ; B. Tarasiuk.** UV-CURED POLY-URETHANE-ACRYLIC COMPOSITIONS AS HARD EXTERNAL LAYERS OF TWO-LAYER PROTECTIVE COATINGS FOR OPTICAL FIBRES. *Polim.Tworz.Wielk,* 1996, vol. 41 (7/8), 448-55
- **M. Koshiba ; K.K,S. Hwang ; S.K. Foley ; D.J. Yarusso ; S. L. Cooper.** PROPERTIES OF ULTRAVIOLET CURABLE POLYURETHANE-ACRYLATES. *J.Mat.Sci.,* May 1982, vol. 17 (5), 1447-58
- **Steeman, P.A.M. ; Slot, J.J.M. ; Melick, N.G.H. ; van, Ven, A.A.F. ; van de, Cao, H. ; Johnson, R.** Mechanical analysis of the in-situ Primary Coating modulus test for optical fibers. *Proceedings 52nd International Wire and Cable Symposium,* 10 November 2003, 41